# EUROPÄISCHE PATENTSCHRIFT

(11) **EP 2 079 779 B1**
(45) Veröffentlichungstag und Bekanntmachung des Hinweises auf die Patenterteilung: **20.04.2016**
(21) Anmeldenummer: 07818670.7
(22) Anmeldetag: 04.10.2007
(51) Int. Cl.: C08L 23/02, C08L 23/08, C08L 23/14, C08J 3/22

(54) **WIRKSTOFFZUSAMMENSETZUNG AUF BASIS VON METALLOCEN-POLYOLEFINWACHSEN ZUR HERSTELLUNG VON STABILISIERTEN, LICHTBESTÄNDIGEN KUNSTSTOFFEN**
ACTIVE SUBSTANCE COMPOSITION ON THE BASIS OF METALLOCENE POLYOLEFIN WAXES FOR PRODUCING STABILIZED, LIGHT-RESISTANT PLASTIC MATERIALS
COMPOSITION DE PRINCIPES ACTIFS À BASE DE CIRES MÉTALLOCÈNES-CIRES DE POLYOLÉFINE POUR LA PRODUCTION DE MATIÈRES PLASTIQUES STABLES ET DE MATIÈRES PLASTIQUES PHOTOSTABLES

(30) Priorität: 10.10.2006 DE 102006047854
(43) Veröffentlichungstag der Anmeldung: 22.07.2009
(73) Patentinhaber: CLARIANT INTERNATIONAL LTD, 4132 Muttenz (CH)
(72) Erfinder: KLING, Reinhod, 86368 Gersthofen (DE)
(74) Vertreter: Mikulecky, Klaus
(86) Internationale Anmeldenummer: PCT/EP2007/008591
(87) Internationale Veröffentlichungsnummer: WO 2008/043468

(56) Entgegenhaltungen:
- EP-B- 1 238 026
- DE-A1- 19 648 895
- US-A- 5 208 275
- US-A1- 2003 078 340

## Beschreibung

Die vorliegende Erfindung betrifft Wirkstoffzusammensetzungen aus Lichtschutzmitteln, insbesondere UV-Stabilisatoren, und Wachsen sowie deren Herstellung und Verwendung.

Unter UV Stabilisatoren werden die verschiedensten Produktklassen verstanden wie z.B. UV Absorber, HALS Produkte (hindered amine light stabilizer) oder auch Quencher verstanden.

Die erfindungsgemäßen Wirkstoffzusammensetzungen enthalten Wachse, die mittels Metallocen-Katalysatoren hergestellt wurden, die einen niederen Tropfpunkt, eine hohe Transparenz und geringe Viskosität aufweisen. Durch die Verwendung dieser Wachse wird die Einarbeitung von UV Stabilisatoren erleichtert, die Prozesstemperaturen können deutlich niedriger gehalten werden, so dass eine deutlich höhere Beladung als bisher üblich möglich ist und auf eine polymeren Träger verzichtet werden kann.

JP 2005054019 beschreibt die Herstellung von Autoaußenteilen, die UV Absorber und HALS in Anteilen bis zu 15 Teilen, sowie bis zu 5 Teile Antioxidantien enthalten.

CN 1174855 offenbart die Herstellung eines Polyolefinmasterbatch, der Lichtsensibilisatoren, Lichtschutz, Antioxidantien und Stärke enthält.

In CN 1109479 wird die Herstellung eines Alterungsschutzmasterbatches auf Polyolefinbasis beschrieben, in das Prozesshilfsmittel bis 2,5 Gew.-%, bis zu 5 bis 20 Gew.-% Sebacate und 1 bis 10 Gew.-% Tris-Phosphite zugegeben werden.

In den angeführten Anmeldungen werden Additive, UV Absorber und HALS Produkte nur bis ca. 25 Gew.-% zugegeben, höhere Zugabemengen sind in der Literatur nicht zu finden.
Eine Möglichkeit die Zugabemengen zu erhöhen wäre, mit einem aufwendig hergestellten hochporösen Rohstoff flüssige oder niedrigschmelzende Lichtschutzmittel einzurühren und unter Hilfe von Vakuum in das Produkt einzuziehen. Dieser sehr spezielle Prozess führt zu deutlich höheren Kosten und ist begrenzt in seiner Anwendbarkeit.

Mit üblichen Verfahren hergestellte UV Masterbatche enthalten üblicherweise maximal 10 Gew.-% UV oder HALS Produkte. Höhere Zugabemengen können aufgrund des Viskositätsunterschieds zu Einarbeitungsproblemen, zu einer inhomogenen Verteilung der Komponenten, und zu reduzierten mechanischen Eigenschaften, wie z.B. geringerer Strangfestigkeit der produzierten Masterbatche führen.

Eine Möglichkeit den Wirkstoffgehalt im Masterbatch zu erhöhen, wäre der Einsatz spezieller niedrigviskoser Polymere, die somit bei tieferen Temperaturen gut verarbeitbar sind und die Einarbeitung einer höheren Additivmenge erlauben. Technische Polymere, die dieses Eigenschaftsprofil aufweisen, lassen sich in der Regel dem Hochpreissegment zuordnen.

Die Aufgabe der vorliegenden Erfindung bestand darin, Wirkstoffzusammensetzungen mit einem möglichst hohen Anteil an UV Stabilisatoren herzustellen, um damit die Herstellung von Kunststoffbauteilen mit hoher thermischer Stabilität, geringen Verfärbungstendenzen sowie gutem Langzeitverhalten technisch, ökonomisch und ökologisch vorteilhaft zu bewerkstelligen und so Produkte von hochwertiger Qualität herzustellen. Darüber hinaus lassen sich solche Zusammensetzungen in eine größere Vielfalt von Polymeren mit unterschiedlicher chemischer Zusammensetzung einarbeiten, da weniger Verträglichkeitsprobleme durch die geringere Menge an Trägermaterial (dem Wachs) auftreten. Die Wachskomponente ermöglicht zudem eine leichtere Einarbeitung und Verteilung der Wirkstoffzusammensetzung in den Polymeren.

Unter den Wachsen werden im Wesentlichen zwei Gruppen unterschieden: Wachse hergestellt unter Verwendung von Metallocen Katalysatoren (Metallocen Wachse) und solche hergestellt auf anderem Wege wie z.B. durch eine Aufbaureaktion mittels anderer Katalysatoren oder z.B. auch hergestellt durch Abbaureaktionen von Polymeren.

Überraschenderweise wurde nun gefunden, dass sich mit Hilfe von Metallocenkatalysatoren hergestellte Polyolefinwachse, insbesondere Polypropylenwachse, in besonders vorteilhafter Weise als Träger für UV Stabilisatoren eignen, wodurch deutlich höhere Beladungen als bisher üblich möglich sind.

Diese Aufgabe wird erfindungsgemäß dadurch gelöst, dass die UV Stabilisatoren in ein Metallocenwachs oder in ein Gemisch unterschiedlicher Metallocenwachse, optional enthaltend ein oder mehrere Nicht-Metallocenwachse und oder Polymere, wobei der überwiegende Anteil aus Metallocenwachs besteht, eingearbeitet werden. Diese erfindungsgemäß verwendeten Wachstypen sind dadurch gekennzeichnet, dass sie in Gegenwart von Metallocen-Katalysatoren hergestellt wurden.

Gegenstand der vorliegenden Erfindung ist daher eine lichtbeständige Wirkstoffzusammensetzung enthaltend
i) ein oder mehrere UV-Stabilisatoren,
ii) ein oder mehrere Metallocen-Polyolefinwachse,
iii) optional ein oder mehrere Wachse ausgewählt aus polaren und unpolaren Nicht-Metallocen-Polyolefinwachsen und
iv) gegebenenfalls ein oder mehrere Homo- und/oder Copolymere des Ethylens und/oder Propylens,
dadurch gekennzeichnet, dass es UV-Stabilisatoren in einer Menge von wenigstens 10 bis 90 Gew.-% und mindestens 10 Gew.-% Wachs enthält, bezogen jeweils auf das Gesamtgewicht der Zusammensetzung. In der bevorzugten Ausführungsform enthält das Wachs mindestens 50 Gew.-% Polypropylen-Metallocenwachs, bezogen auf das Gewicht des Gesamtwachsanteils.

Neben dem Metallocen-Polyolefinwachs kann die erfindungsgemäße Zusammensetzung vorzugsweise noch ein oder mehrere Metallocen-Copolymerwachse aus Propylen und 0,1 bis 50 % Ethylen und/oder 0,1 bis 50 % mindestens eines verzweigten oder unverzweigten 1-Alkens mit 4 bis 20 C-Atomen mit einem Tropfpunkt (Ring/Kugel) zwischen 80 und 170 °C.
Die erfindungsgemäß verwendeten Metallocenwachse weisen eine Schmelzviskosität, gemessen bei einer Temperatur von 170 °C, im Bereich von 40 bis 80 000 mPa·s, vorzugsweise von 45 bis 35 000 mPa·s, besonders bevorzugt von 50 bis 10 000 mPa·s auf.

Die Wachse bzw. die Homo- und/oder Copolymere des Ethylens und/oder Propylens der Komponenten ii), iii) und iv) schmelzen bei einer Temperatur im Bereich von 80 bis 170 °C.

Die in Gegenwart von Metallocen als Katalysator hergestellten Wachse sind weitgehend oder vollkommen amorph und können zusätzlich bei Bedarf polar modifiziert sein.

Als Nicht-Metallocen-Polyolefinwachse sind unpolare, aber auch polare Nicht-Metallocenewachse, ausgewählt aus oxidierten und nicht-oxidierten Wachsen, mit einem Tropfpunkt im Bereich von 90 bis 130 °C und einer Viskosität von kleiner als 30 000 mPa·s, vorzugsweise kleiner als 1,5 000 mPa·s, bei einer Temperatur von 140 °C geeignet.

Als Nicht-Metallocen-Polyolefinwachse kommen Homopolymerisate des Ethylens oder höherer 1-Olefine mit 3 bis 10 C-Atomen oder deren Copolymerisate untereinander in Frage. Bevorzugt weisen die Polyolefinwachse eine gewichtsmittlere Molmasse M_{w} zwischen 1 000 und 20 000 g/mol und eine zahlenmittlere Molmasse Mₙ zwischen 500 und 15 000 g/mol auf.

Weiter können Copolymere und/ oder Homopolymere des Ethylens und/oder Propylens vorteilhaft als Verträglichkeitsvermittler in der erfindungsgemäßen Zusammensetzung eingesetzt werden. Als Copolymere des Ethylens kommen hier zum Beispiel Ethylen-Methyl-Acrylat-Copolymere, Ethylen-Ethyl-Acrylat-Copolymere, Ethylen-Butyl-Acrylat-Copolymere oder Ethylen-Vinyl-Acetat-Copolymere in Frage.
Als Copolymere des Propylens sind insbesondere Ethylen-Methyl-Acrylat-Copolymere geeignet.
Diese Produkte besitzen typischerweise einen Erweichungspunkt von kleiner als 60 °C, eine Schmelztemperatur von kleiner als 100 °C, einen Comonomeranteil von 10 bis 20 %, sowie einen Schmelzindex bei 190 °C und 2,16 kg von 1 bis 10 g/10 min. Im weiteren Verlauf der Beschreibung werden sie als "Copolymere des Ethylens oder Propylens" bezeichnet.

Erfindungsgemäß bevorzugte Gemische enthalten 10 bis 90 Gew.-%, Lichtschutzmittel vorzugsweise 15 bis 85 Gew.-%, insbesondere 25 bis 85 Gew.-%, sowie 10 bis 90 Gew.-%, vorzugsweise 15 bis 85 Gew.-% eines Metallocen-Polyolefinwachses. Zusätzlich können weitere Stabilisatoren, organische und/oder anorganische Pigmente, Zusatzstoffe, Füllstoffe wie Silikate, Nanoclays, Kieselsäuren, Zeolite zwischen 0 bis 30 Gew.-% enthalten sein Eine Auflistung geeigneter Zusatzstoffe findet sich beispielsweise im "Plastics Additives Handbook", 5.Ausgabe (2000), Hanser-Verlag .

In einer bevorzugten Ausführungsform enthält die erfindungsgemäße Zusammensetzung 10 bis 90 Gew.-%, vorzugsweise 15 bis 85 Gew.-%, des Metallocen-Polyolefinwachses, 0 bis 30 Gew.-%, vorzugsweise 0,1 bis 25 Gew.-%, einer oder mehrerer Nicht-Metallocenwachse und/oder Homo- und/oder Copolymere des Etyhlens und/oder Propylens, 10 bis 90 Gew.-%, vorzugsweise 15 bis 85 Gew.-%, eines oder mehrerer UV-Stabilisatoren, und 0 bis 30 Gew.-% weiterer Füllstoffe, Pigmente oder Additive.

Für die Herstellung der erfindungsgemäß verwendeten Metallocen-Polyolefinwachse werden Metallocenverbindungen der Formel I eingesetzt.

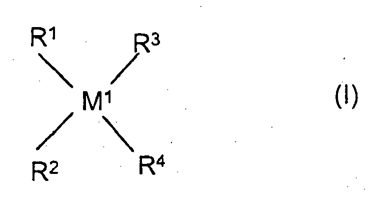

Diese Formel umfasst auch Verbindungen der Formel Ia, 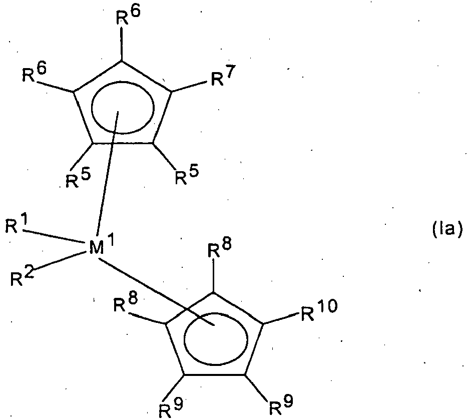 der Formel Ib 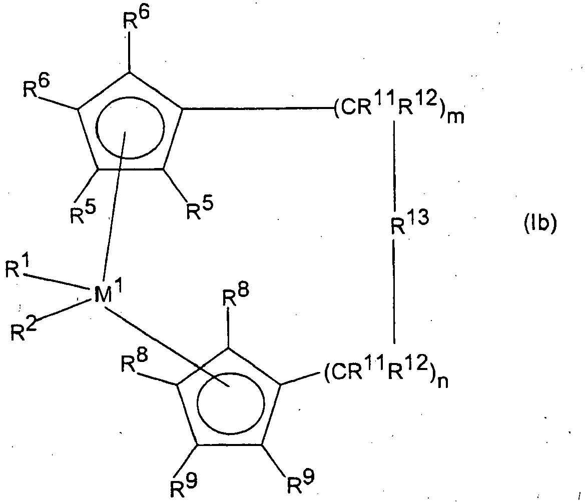 und der Formel Ic

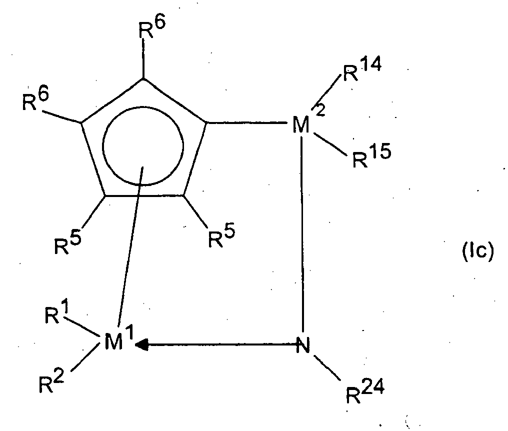

In den Formeln I, Ia und Ib ist M¹ ein Metall der Gruppe IVb, Vb oder VIb des Periodensystems, beispielsweise Titan, Zirkonium, Hafnium, Vanadium, Niob, Tantal, Chrom, Molybdän, Wolfram, vorzugsweise Titan, Zirkonium, Hafnium. R¹ und R² sind gleich oder verschieden und bedeuten ein Wasserstoffatom, eine C₁-C₁₀, vorzugsweise C₁-C₃-Alkylgruppe, insbesondere Methyl, eine C₁-C₁₀-, vorzugsweise C₁-C₃-Alkoxygruppe, eine C₆-C₁₀, vorzugsweise C₆-C₈-Arylgruppe, eine C₆-C₁₀-, vorzugsweise C₆-C₈-Aryloxygruppe, eine C₂-C₁₀, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, OSiR¹⁶₃-, -SiR¹⁶₃- oder -PR¹⁶₂-Rest, worin R¹⁶ eine C₁-C₁₀, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 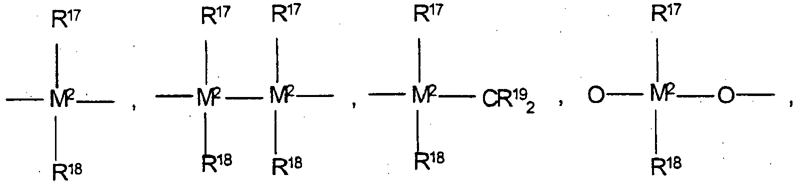 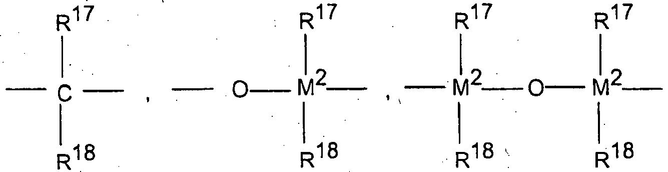 =BR¹⁷, =AIR¹⁷, -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid, . Bis(1,2,4-trimethylcyclopentadienyl)zirkoniumdichlorid, Bis(1,2-dimethylcyclopentadienyl)zirkoniumdichlorid, Bis(1,3-dimethylcyclopentadienyl)zirkoniumdichlorid, Bis(1-methylindenyl)zirkoniumdichlorid, Bis(1-n-butyl-3-methyl-cyclopentadienyl)zirkoniumdichlorid, Bis(2-methyl-4,6-di-i.propyl-indenyl)zirkoniumdichlorid, Bis(2-methylindenyl)zirkoniumdichlorid, Bis(4-methylindenyl)zirkoniumdichlorid, Bis(5-methylindenyl)zirkoniumdichlorid, Bis(alkylcyclopentadienyl)zirkoniumdichlorid, Bis(alkylindenyl)zirkoniumdichlorid, Bis(cyclopentadienyl)zirkoniumdichlorid, Bis(indenyl)zirkoniumdichlorid, Bis(methylcyclopentadienyl)zirkoniumdichlorid, Bis(n-butylcyclopentadienyl)zirkoniumdichlorid, Bis(octadecylcyclopentadienyl)zirkoniumdichlorid, Bis(pentamethylcyclopentadienyl)zirkoniumdichlorid, Bis(trimethylsilylcyclopentadienyl)zirkoniumdichlorid, Biscyclopentadienylzirkoniumdibenzyl, Biscyclopentadienylzirkoniumdimethyl, Bistetrahydroindenylzirkoniumdichlorid, Dimethylsilyl-9-fluorenylcyclopentadienylzirkoniumdichlorid, Dimethylsilyl-bis-1-(2,3,5-trimethylcyclopentadienyl)zirkoniumdichlorid, Dimethylsilyl-bis-1-(2,4-dimethyl-cyclopentadienyl)zirkoniumdichlorid, Dimethylsilyl-bis-1-(2-methyl-4,5-benzoindenyl)zirkoniumdichlorid, Dimethylsilyl-bis-1-(2-methyl-4-ethylindenyl)zirkoniumdichlorid, Dimethylsilyl-bis-1-(2-methyl-4-i-propylindenyl)zirkoniumdichlorid, Dimethylsilyl-bis-1-(2-nnethyl-4-phenylindenyl)zirkoniumdichlorid, Dimethylsilyl-bis-1-(2-methyl-indenyl)zirkoniumdichlorid, Dimethylsilyl-bis-1-(2-methyltetrahydroindenyl)zirkoniumdichlorid, Dimethylsilyl-bis-1-indenylzirkoniumdichlorid, Dimethylsilyl-bis-1-indenylzirkoniumdimethyl, . Dimethylsilyl-bis-1-tetrahydroindenylzirkoniumdichlorid, Diphenylmethylen-9-fluorenylcyclopentadienylzirkoniumdichlorid, Diphenylsilyl-bis-1-indenylzirkoniumdichlorid, Ethylen-bis-1-(2-methyl-4,5-benzoindenyl)zirkoniumdichlorid, Ethylen-bis-1-(2-methyl-4-phenylindenyl)zirkoniumdichlorid, Ethylen-bis-1-(2-methyl-tetrahydroindenyl)zirkoniumdichlorid, Ethylen-bis-1-(4,7-dimethyl-indenyl)zirkoniumdichlorid, Ethylen-bis-1-indenylzirkoniumdichlorid, Ethylen-bis-1-tetrahydroindenylzirkoniumdichlorid, Indenyl-cyclopentadienyl-zirkoniumdichlorid Isopropyliden(1-indenyl)(cyclopentadienyl)zirkoniumdichlorid, Isopropyliden(9-fluorenyl)(cyclopentadienyl)zirkoniumdichlorid, Phenylmethylsilyl-bis-1-(2-methyl-indenyl)zirkoniumdichlorid, sowie jeweils die Alkyl- oder Aryl-Derivate dieser Metallocendichloride.

Zur Aktivierung der Einzentren-Katatysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹3. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bis-trifluormethylphenyl, Mesityl, Xylyl oder Tolyl.

Zusätzlich ist häufig eine dritte Komponente erforderlich, um einen Schutz gegen Katalysator-Gifte zu gewährleisten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Hierbei wurden die Schmelzviskositäten nach DIN 53019 mit einem Rotationsviskosimeter, die Tropfpunkte nach DIN 51801/2, die Erweichungspunkte Ring/Kugel nach DIN EN 1427 bestimmt. Die Tropfpunktbestimmung erfolgt mit einem Tropfpunktgerät nach Ubbelohde gemäß DIN 51801/2, der Erweichungspunkt Ring/Kugel nach DIN EN 1427.
Als UV Stabilisatoren können hauptsächlich drei unterschiedliche Produktklassen eingesetzt werden, sterisch gehinderte Amine (HALS), Nickel Quencher und/oder UV Absorber. Möglich sind auch Kombinationen verschiedener HALS, Nickel Quencher oder UV Absorber sowie Mischungen der Produkte untereinander. Dies betrifft alle Produkte, die in "Plastics Additives Handbook", 5.Ausgabe (2000), Hanser-Verlag Seite 114 - 136, angeführt werden.

Erfindungsgemäß einsetzbare UV-Stabilisatoren werden in EP-B-981530 (Seite 5, Zeile7 bis Seite 28, Zeile 30) genannt. Auf EP-A- 981530 wird hiermit ausdrücklich Bezug genommen. Bevorzugt sind Verbindungen wie sie in EP-B-981530 auf Seite 13, Zeilen 22 bis 26 und Seite 28, Zeilen 28 bis 30 beschrieben werden.

Erfindungsgemäß einsetzbare Quencher werden in EP-B-981530 auf Seite 42, Zeilen 50 bis 55 genannte. Insbesondere bevorzugt wird die Verbindung mit der der CAS-Nummer 14516-71-3 (Handelsname Cyasorb UV-1084)

Die Einarbeitung der UV-Stabilisatoren in die Wachse erfolgt nach dem bekannten Stand der Technik, indem alle Komponenten bei erhöhter Temperatur zu einer homogenen Masse vermengt und anschließend in eine geeignete Endform überführt werden. Die Herstellung von derartigen Mischungen erfolgt meist auf einem Extruder oder Kneter, es gibt aber auch noch seltener verwendete andere Aggregate. Die Endform ist meist das Granulat, welches durch Stranggranulierung, Heißabschlag oder Unterwassergranulierung hergestellt wird. Von den bekannten Methoden ist speziell der Extruder und die Unterwassergranulierung bevorzugt.

Der erforderliche Anteil an Metallocenwachsen ist abhängig von den Verarbeitungseigenschaften sowie von der Granulatfestigkeiten der Zwischenprodukte, der Spezifikation der Eigenschaften des fertigen Werkstoffs, dessen Oberflächenbeschaffenheit sowie dessen geforderten optischen Eigenschaften.

Die erfindungsgemäßen Zusammensetzungen können neben den Wachsen und Lichtschutzmitteln natürlich auch noch andere Stoffe enthalten, wie z.B. weitere Verarbeitungsstabilisatoren und phenolische Antioxidantien enthalten, um nur einige zu erwähnen. Besonders zu nennen sind hier die phenolischen, phosphite und phosphonitischen Antioxidantien, nicht zu vergessen die Sekundär-Antioxidantien.

Bei den Phenolischen Antioxidantien betrifft dies vor allem Tetrakis[methylen(3,5-di-tert-butyl-4-hydroxyhydrocinnamate)] methan, 1,2,3-Tris(3,5-ditert-butyl-4-hydroxy-benzyl)isocyanurat, Octadecyl-3-5-di-tert-butyl-4-hydroxyhydrocinnamat, Bis[3,3-bis-(4'-hydroxy-3'-tert-butyl-phenyl)butanoicacid)glycol ester, Mischung von Tetrakis[methylene(3,5-di-tert-butyl-4-hydroxyhydrocinnamate)] methan und Bis[3,3-bis-(4'-hydroxy-3'-tert-butyl-phenyl)butanoicacid)glycol ester oder, Ethylene bis(oxyethylene)bis-(3-(5-tert-butyl-4-hydroxy-m-tolyl)-propionat.
Bei den Phosphite und Phosphonite Antioxidantien seien hier insbesondere das Tris(2,4-di-tert-butylphenyl)phoshit, Bis(2,4-ditert-butylphenyl)pentaerythritol disphoshit, und die CAS Reg.nr. 119345-01-6 / 38613-77-3 genannt.
Bei den Co-Stabilisatoren seien hier insbesondere das Distearyl-3,3'-thiodipropionat und das Distearyl-disulfide genannt.

Weitere erfindungsgemäß einsetzbare Antioxidantien und Verarbeitungsstabilisatoren werden in EP-B-981530 (Seite 40, Zeile 10 bis Seite 42 Zeile 17 sowie Seite 44, Zeile 45 bis 55) offenbart.

Die vorliegende Erfindung betrifft auch ein Verfahren zum Herstellen der erfindungsgemäßen Wirkstoffzusammensetzung durch Zusammengeben der Einzelbestandteile und anschließender Homogenisierung im Extruder oder Kneter. Das Vormischen der Einzelkomponenten ist dabei bei der Herstellung der Zusammensetzung bevorzugt und kann in einer geeigneten Mischapparatur erfolgen. , gegebenenfalls können aber auch weitere Additive erst später über eine Seitendosierung in fester oder flüssiger Form zugegeben werden

Die eingesetzten Rohstoffe können in verschiedenster Form vorliegen. Die Wachse, wie auch die weiteren Zusatzstoffe und Additive können z.B. als Granulat, Schuppe, Pulver oder Feinstpulver in der Mischung enthalten sein, während die Lichtschutzmittel zusätzlich auch noch in flüssig Form vorliegen können.

Für die Herstellung von staubfreien, granulat- und pulverförmigen hochgeladenen Wirkstoffzuammensetzungen sind zurzeit folgende einstufige oder mehrstufige Verfahren bekannt:
Es können alle Komponenten kalt gemischt werden und die Zugabe erfolgt über den Haupteinzug eines Extruders oder die wachsartigen / polymeren Formulierungsanteile werden über den Haupteinzug des Extruders zugeführt, die pulverförmigen oder flüssigen UV Stabilisatoren werden über entsprechende Seitenbeschickungen in die Maschine eingebracht. Im Anschluss daran kann eine Schmelzemischung in einem geeigneten Extruder oder in Knetern durchgeführt werden. Daran schließt sich eine Granulierung, Vermahlung oder Versprühung an.

Eine Kaltmischung besteht aus geeigneten Polymerträgern, wie beispielsweise Polyethylen, Polypropylen oder Ethylenvinylacet. Der Nachteil solcher Polymermischungen ist die oft begrenzte Verträglichkeit einzelner Komponenten, wobei es zu einer Separierung von Polymer und den Zusatzstoffen wie den Lichtschutzmitteln kommen kann.

Bei der Mischung bei erhöhter Temperatur kann die Wärmeenergie über Friktion, über separate Aufheizung des Mischtroges oder auf beide Weisen eingebracht werden.

Bei der Herstellung der Zusammensetzung auf dem Extruder wird vorzugsweise mit einem auf den hohen Wirkstoffgehalt abgestimmten Schneckenaufbau gearbeitet. Das Temperaturbild ist vorzugsweise niedriger als im der Stand der Technik angegeben. Zur Herstellung der erfindungsgemäßen Zusammensetzungen wird vorteilhaft eine Stranggranulierung eingesetzt, eine Unterwassergranulierung oder Heißabschlag kann aber auch zum Einsatz kommen.

Die erfindungsgemäßen Zusammensetzungen erlauben es teilsynthetische oder synthetische Polymere gegen den schädlich Einfluss von energiereicher Strahlung wie Licht oder UV, aber auch gegen Wärme, den Abbau durch Sauerstoff oder andere Abbauvorgänge zu stabilisieren und werden daher insbesondere für die Herstellung von UV-stabilen Kunststoffen oder Kunststoffgegenständen verwendet.

Im Gegensatz zu den im Stand der Technik beschrieben UV-stabilisierten Zusammensetzungen können mit dem erfindungsgemäßen Produkten eine breite Auswahl von Polymeren stabilisiert werden. Als Beispiele zu nennen sind : Polyolefine, Ethylen-Vinylacetat-Copolymere (EVA), Styrol-Acrylnitril-Copolymere (SAN), Polyvinylchlorid (PVC), Polyamid (PA), Poly-ethylenglykol-terephthalat (PET), Poly-butylenglykol-terephthalat (PBT) und deren Copolyester, AcrylnitrilButadien-Styrol-Copolymere (ABS), Polycarbonat (PC), sowie verschiedene Sonderpolymere. Weiterhin geeignet sind auch alle natürlichen, halbsynthetischen oder synthetischen Polymere, worunter auch Lacke zu verstehen sind.

Nach Abmischung mit dem Polymer und Erreichung der erforderlichen Sollkonzentration können die Kunststoffmischungen dann zu den gewünschten Endprodukten weiterverarbeitet werden.

### Beispiele:

Die erfindungsgemäß eingesetzten, in Tabelle 1 aufgeführten Metallocenwachse a bis d wurden durch Copolymerisation von Propylen mit Ethylen mit dem Metallocenkatalysator Dimethylsilylbisindenylzirkoniumdichlorid nach dem in EP A 0 384 264 angegebenen Verfahren (allgem. Vorschrift Bsp. 1-16) hergestellt. Die unterschiedlichen Erweichungspunkte und Viskositäten wurden durch Variation des Ethyleneinsatzes und der Polymerisationstemperatur eingestellt.

Die Produktkennwerte werden nach folgenden Methoden bestimmt:
Tropfpunkt ISO 2176 //ASTM D 3954 (°C)
Viskosität DIN 53018 (mPa·s)
Dichte ISO 1183 (g/cccm)
Molmasse wird mittels Gelpermeationschromatographie (GPC) bestimmt

**Eingesetzte Metallocenwachse**

| | Metallocenwachs a) | Metallocenwachs b) | Metallocenwachs c) | Metallocenwachs d) |
|---|---|---|---|---|
| Tropfpunkt (°C) | 92 | 93 | 102 | 140 |
| Viskosität bei 170 °C (mPa·s) | 2900 | 7900 | 9800 | 65 |

**Eigenschaften der unpolaren PE-Wachse**

| Tropfpunkt [°C] | Viskosität bei 140 °C [mPa·s] | Säurezahl [mg KOH/g] | Dichte [g/cm³] |
|---|---|---|---|
| Ca. 130 | ca. 25000 | 0 | 0,92 |

**Copolymer des Ethylens**

| Erweichungspunkt | Schmelzpunkt | Viskosität MFR | Comonomer Et-Acrylat % | Dichte |
|---|---|---|---|---|
| [°C] | [°C] | 190 °C/2,16kg | | [g/cm³] |
| ca. 50 - 60 | ca. 85 - 98 | ca. 5 - 10 g/10min | ca. 15 - 20 | ca. 0,94 |

**Homopolymer des Ethylens**

| | Schmelzpunkt (°C) | Viskosität 190°C/2,16 kg | Dichte (g/cm³) |
|---|---|---|---|
| Polyethylen LDPE Sabic 2102 TX | | 2g / 10 min | 0,92 |

Die erfindungsgemäßen UV Stabilisationszusammensetzung wurde wie nachfolgend beschrieben hergestellt:
Als Mischung für die Extrusion:
   Mischer: Hentschelmischer, Inhalt 5 Liter
   Ansatz: entsprechend den nachstehend aufgeführten Beispielen
   Vormischen: Ansatz ca. 2 bis 4 min. bei U = 600 /min
Vorgemischt werden die Wachs bzw. Wachs-Polymermischungen, die HALS bzw.
UV Schutzmittelzugabe erfolgte über entsprechende
Seitenbeschickungsequipments.

Nachfolgend erfolgte die Extrusion auf einer gleichlaufenden Doppelschnecke mit nachgeschalteter Stranggranulierung bzw. Unterwassergranulierung. Granulatgröße im Durchmesser 0,8 bis 3 mm.

Herstellungsbeispiele:
In den nachfolgenden Beispielen wurden nach vorstehend beschriebenen Verfahren folgende Zusammensetzung hergestellt. Als Metallocenwachse wurde jeweils das vorstehende beschriebene Wachs eingesetzt,
   1) 50 % Mischung von Estern des 2,2,6,6-tetramethylpiperidinol-4-piperidinol mit Fettsäuren
      25 % Metallocenewachs c)
      25% Metallocenewachs d)
   2) 50 % Mischung von Estern des 2,2,6,6-tetramethylpiperidinol-4-piperidinol mit Fettsäuren
      25 % Metallocenewachs b)
      25 % Metallocenewachs d)
   3) 50 % Mischung von Estern des 2,2,6,6-tetramethylpiperidinol-4-piperidinol mit Fettsäuren
      33 % Metallocenewachs c)
      17 % Metallöcenewachs d)
   4) 60 % Polymer des 2,2,4,4 tetramethyl-7-oxa-3, 20-diaza-dispiro [5.1.1.12]-heneicosan-21-on und Epichlorohydrin
      40 % Metallocenwachs c)
   5) 60 % Polymer des 2,2,4,4 tetramethyl-7-oxa-3, 20-diaza-dispiro [5.1.1.12]-heneicosan-21-on und Epichlorohydrin
      32 % Metallocenwachs c)
      8 % LDPE MFI 2 g/10 min
   6) 50 % Polymer des 2,2,4,4 tetramethyl-7-oxa-3, 20-diaza-dispiro# [5.1.1.12]-heneicosan-21-on und Epichlorohydrin
      40 % Metallocenwachs c)
      10 % LDPE MFI 2 g/10 min
   7) 25 % Polymer des 2,2,4,4 tetramethyl-7-oxa-3, 20-diaza-dispiro [5.1.1.12]-heneicosan-21-on und Epichlorohydrin
      50 % Metallocenwachs c)
      25 % Metallocenwachs d)
   8) 46,6 % Polymer des 2,2,4,4 tetramethyl-7-oxa-3, 20-diaza-dispiro [5.1.1.12]-heneicosan-21-on und Epichlorohydrin
      23,3 % 2-Hydroxy-4-n-octyloxybenzophenone
      30,0 % Metallocenwachs b)
   9) 30% Mischung von 2,2,4,4,-tetramethyf-20-(β-myristyl und lauryl-oxycarbonyl)-ethyl-7-oxa-3, 20-diaza-dispiro [5.1.1.12]-heneicosan-21-on
      70 % Metallocenwachs c)

Anwendungsbeispiele:
Die Additiv-Kombinationen gemäß Herstellungsbeispielen 1 bis 19 wurden teilweise vorgemischt und in einer gleichlaufenden Doppelschnecke mit einem speziellen Schneckenaufbau sowie mit einem niederen Temperaturbild extrudiert. Dies führte in unterschiedlichen Polymeren zu verringerten Farbveränderungen, höheren thermischen Stabilitäten und einer erhöhten Beständigkeit gegen UV-Licht sowie zu einer Qualitätsverbesserung.

## Patentansprüche

1. Wirkstoffzusammensetzung enthaltend
i) ein oder mehrere UV-Stabilisatoren,
ii) ein oder mehrere Metallocen-Polyolefinwachse,
iii) optional ein oder mehrere Wachse ausgewählt aus polaren und unpolaren Nicht-Metallocen-Polyolefinwachsen sowie
iv) gegebenenfalls ein oder mehrere Homo- und/oder Copolymere des Ethylens und/oder Propylens,
**dadurch gekennzeichnet, dass** diese UV-Stabilisatoren in einer Menge von wenigstens 10 bis 90 Gew.-% und mindestens 10 Gew.-% Wachs enthält, bezogen jeweils auf das Gesamtgewicht der Zusammensetzung.

2. Zusammensetzung nach Anspruch 1, **dadurch gekennzeichnet, dass** das Wachs mindestens 50 Gew.-% Polypropylen-Metallocenwachs enthält, bezogen auf das Gewicht des Wachsanteils.

3. Zusammensetzung nach Anspruch 1 und/oder 2, **dadurch gekennzeichnet, dass** die Wachse bzw. die Homo- und/oder Copolymere des Ethylens und/oder Propylens der Komponenten ii), iii) und iv) bei einer Temperatur im Bereich von 80 bis 170 °C schmelzen.

4. Zusammensetzung nach mindestens einem der vorhergehenden Ansprüche, **dadurch gekennzeichnet, dass** das Metallocen-Polyolefinwachs einen Tropfpunkt im Temperaturbereich zwischen 80 und 170 °C besitzt und eine Schmelzviskosität, gemessen bei einer Temperatur von 170 °C, im Bereich von 40 bis 80 000 mPa·s, vorzugsweise von 45 bis 35 000 mPa·s, insbesondere von 50 bis 10 000 mPa·s.

5. Zusammensetzung nach einem oder nach mehreren der Ansprüche 1 bis 4, **dadurch gekennzeichnet, dass** es 10 bis 90 Gew.-%, vorzugsweise 15 bis 85 Gew.-%, des Metallocen-Polyolefinwachses, 0,1 bis 30 Gew.-%, vorzugsweise 0 bis 25 Gew.-%, einer oder mehrerer Nicht-Metallocenewachse und/oder Copolymere des Etyhlens, 10 bis 90 Gew.-%, vorzugsweise 15 bis 85 Gew.-%, eines oder mehrerer UV-Stabilisatoren, und 0 bis 30 Gew.-% übliche Füllstoffe oder Additive enthält.

6. Zusammensetzung nach einem oder nach mehreren der Ansprüche 1 bis 5, **dadurch gekennzeichnet, dass** es ein oder mehrere Nicht-Metallocen-Polyolefinwachse ausgewählt aus oxidierten und nicht oxidierten Wachsen enthält, die einen Tropfpunkt im Bereich von 90 bis 130 °C und eine Viskosität von kleiner als 30 000 mPa·s, gemessen bei 140°C, besitzen.

7. Zusammensetzung nach einem oder nach mehreren der Ansprüche 1 bis 6, **dadurch gekennzeichnet, dass** diese neben dem Metallocen-Polyolefinwachs ein oder mehrere Metallocen-Copolymerwachse aus Propylen und/oder Ethylen und 0,1 bis 50 Ges.-% eines oder mehrerer weiterer Monomere ausgewählt aus Ethylen und verzweigten oder unverzweigten 1-Alkenen mit 4 bis 20 Kohlenstoffatomen enthält.

8. Verfahren zur Herstellung einer Zusammensetzung nach einem oder nach mehreren der Ansprüche 1 bis 7, **dadurch gekennzeichnet, dass** die Einzelkomponenten kalt gemischt werden und anschließend die Homogenisierung der Einzelbestandteile in einem Extruder oder Kneter erfolgt.

9. Verfahren nach Anspruch 8, **dadurch gekennzeichnet, dass** die Edukte als Granulat, Schuppen, Pulver oder als Feinkornmischung eingesetzt werden.

10. Verfahren nach Anspruch 8 und/oder 9, **dadurch gekennzeichnet, dass** die UV-Stabilisatoren auch in flüssiger Form eingesetzt werden können.

11. Verfahren nach mindestens einem der vorhergehenden Ansprüche 8 bis 10, **dadurch gekennzeichnet, dass** im Anschluss an die Homogenisierung eine Granulierung über Strang- und Kopfgranulierung oder über Heißabschlag oder Unterwassergranulierung erfolgt.

12. Verwendung einer Zusammensetzung nach einem oder nach mehreren der Ansprüche 1 bis 7 zum Herstellen von lichtbeständigen Kunststoffen oder Kunststoffteilen.

13. Verwendung einer Zusammensetzung nach mindestens einem der Ansprüche 1 bis 7 zur Stabilisierung von natürlichen, teilsynthetischen oder synthetischen Polymeren gegen den schädlich Einfluss von energiereicher Strahlung wie Licht oder UV, sowie gegen Wärme, den Abbau durch Sauerstoff oder andere Abbauvorgänge.

14. Verwendung nach Anspruch 13, **dadurch gekennzeichnet, dass** die Zusammensetzung mit einem oder mehreren Polymeren aus der folgenden Gruppe gemischt: Polyolefine, Ethylen-Vinylacetat-Copolymere (EVA), Styrol-Acrylnitril-Copolymere (SAN), Polyvinylchlorid (PVC), Polyamid (PA), Polyethylenglykol-terephthalat (PET), Poly-butylenglykol-terephthalat (PBT) und deren Copolyester, Acrylnitril-Butadien-Styrol-Copolymere (ABS), Polycarbonat (PC) und danach zum Endartikel weiterverarbeitet wird.

## Claims

1. An active substance composition comprising
i) one or more UV stabilizers,
ii) one or more metallocene polyolefin waxes,
iii) optionally, one or more waxes selected from polar and apolar nonmetallocene polyolefin waxes, and
iv) if desired, one or more homopolymers and/or copolymers of ethylene and/or of propylene,
wherein it comprises UV stabilizers in an amount of at least 10% to 90% by weight and at least 10% by weight of wax, based in each case on the total weight of the composition.

2. The composition as claimed in claim 1, wherein the wax contains at least 50% by weight of polypropylene metallocene wax, based on the weight of the wax fraction.

3. The composition as claimed in claim 1 and/or 2, wherein the waxes and/or the homopolymers and/or copolymers of ethylene and/or of propylene of the components ii), iii) and iv) melt at a temperature in the range from 80 to 170°C.

4. The composition as claimed in at least one of the preceding claims, wherein the metallocene polyolefin wax possesses a dropping point in the temperature range between 80 and 170°C and a melt viscosity, measured at a temperature of 170°C, in the range from 40 to 80 000 mPa·s, preferably from 45 to 35 000 mPa·s, in particular from 50 to 10 000 mPa·s.

5. The composition as claimed in one or as claimed in two or more of claims 1 to 4, which contains 10% to 90% by weight, preferably 15% to 85% by weight, of the metallocene polyolefin wax, 0.1% to 30% by weight, preferably 0% to 25% by weight, of one or more nonmetallocene waxes and/or copolymers of ethylene, 10% to 90% by weight, preferably 15% to 85% by weight, of one or more UV stabilizers, and 0% to 30% by weight of customary fillers or additives.

6. The composition as claimed in one or as claimed in two or more of claims 1 to 5, which contains one or more nonmetallocene polyolefin waxes selected from oxidized and nonoxidized waxes which possess a dropping point in the range from 90 to 130°C and a viscosity of less than 30 000 mPa·s, measured at 140°C.

7. The composition as claimed in one or as claimed in two or more of claims 1 to 6, which contains, in addition to the metallocene polyolefin wax, one or more metallocene copolymer waxes of propylene and/or ethylene and 0.1% to 50% by weight of one or more further monomers selected from ethylene and branched or unbranched 1-alkenes having 4 to 20 carbon atoms.

8. A process for preparing a composition as claimed in one or as claimed in two or more of claims 1 to 7, which comprises mixing the individual components cold and subsequently homogenizing the individual constituents in an extruder or compounder.

9. The process as claimed in claim 8, wherein the starting materials are used in the form of granules, flakes, powders or a fine-grain mixture.

10. The process as claimed in claim 8 and/or 9, wherein the UV stabilizers can also be used in liquid form.

11. The process as claimed in at least one of the preceding claims 8 to 10, wherein the homogenizing is followed by a pelletizing operation involving strand and die-face pelletizing or involving hot cutting or underwater pelletizing.

12. The use of a composition as claimed in one or as claimed in two or more of claims 1 to 7 for producing light-resistant plastic materials or plastic-material parts.

13. The use of a composition as claimed in at least one of claims 1 to 7 for stabilizing natural, semisynthetic or synthetic polymers against the harmful influence of high-energy radiation such as light or UV, and also against heat, degradation by oxygen, or other degradation processes.

14. The use as claimed in claim 13, wherein the composition is mixed with one or more polymers from the following group: polyolefins, ethylenevinyl acetate copolymers (EVA), styrene-acrylonitrile copolymers (SAN), polyvinyl chloride (PVC), polyamide (PA), polyethylene glycol terephthalate (PET), polybutylene glycol terephthalate (PBT) and copolyesters thereof, acrylonitrile-butadiene-styrene copolymers (ABS), polycarbonate (PC), and thereafter is processed further to the end-product article.

## Revendications

1. Composition de substances actives, contenant
i) un ou plusieurs stabilisants des UV,
ii) une ou plusieurs cires de polyoléfine à métallocène,
iii) éventuellement une ou plusieurs cires choisies parmi les cires de polyoléfine, non à métallocène, polaires et non polaires ainsi que
iv) le cas échéant un ou plusieurs homopolymères et/ou copolymères de l'éthylène et/ou du propylène,
**caractérisée en ce qu'**elle contient ces stabilisants des UV en une quantité d'au moins 10 à 90% en poids et au moins 10% en poids de cire, à chaque fois par rapport au poids de la composition.

2. Composition selon la revendication 1, **caractérisée en ce que** la cire contient au moins 50% en poids de cire de polypropylène à métallocène, par rapport au poids de la proportion de cire.

3. Composition selon la revendication 1 et/ou 2, **caractérisée en ce que** les cires ou les homopolymères et/ou les copolymères de l'éthylène et/ou du propylène des composants ii), iii) et iv) fondent à une température dans la plage de 80 à 170°C.

4. Composition selon au moins l'une quelconque des revendications précédentes, **caractérisée en ce que** la cire de polyoléfine à métallocène présente un point de goutte dans la plage de température entre 80 et 170°C et présente une viscosité de masse fondue, mesurée à une température de 170°C, dans la plage de 40 à 80.000 mPa·s, de préférence de 45 à 35.000 mPa·s, en particulier de 50 à 10.000 mPa.s.

5. Composition selon l'une ou plusieurs des revendications 1 à 4, **caractérisée en ce qu'**elle contient 10 à 90% en poids, de préférence 15 à 85% en poids, de la cire de polyoléfine à métallocène, 0,1 à 30% en poids, de préférence 0 à 25% en poids, d'une ou de plusieurs cires non à métallocène et/ou d'un ou de plusieurs copolymères de l'éthylène, 10 à 90% en poids, de préférence 15 à 85% en poids, d'un ou de plusieurs stabilisants des UV et 0 à 30% en poids de charges ou d'additifs usuels.

6. Composition selon l'une ou plusieurs des revendications 1 à 5, **caractérisée en ce qu'**elle contient une ou plusieurs cires de polyoléfine non à métallocène choisies parmi les cires oxydées et non oxydées, qui présentent un point de goutte dans la plage de 90 à 130°C et une viscosité inférieure à 30.000 mPa·s, mesurée à 140°C.

7. Composition selon l'une ou plusieurs des revendications 1 à 6, **caractérisée en ce qu'**elle contient, outre la cire de polyoléfine à métallocène, une ou plusieurs cires de copolymère à métallocène de propylène et/ou d'éthylène et de 0,1 à 50% en poids d'un ou de plusieurs autres monomères choisis parmi l'éthylène et les 1-alcènes ramifiés ou non ramifiés comprenant 4 à 20 atomes de carbone.

8. Procédé pour la préparation d'une composition selon l'une ou plusieurs des revendications 1 à 7, **caractérisé en ce que** les constituants individuels sont mélangés à froid et l'homogénéisation des constituants individuels a ensuite lieu dans une extrudeuse ou un malaxeur.

9. Procédé selon la revendication 8, **caractérisé en ce que** les produits de départ sont utilisés sous forme de granulat, d'écailles, de poudre ou de mélange à grains fins.

10. Procédé selon la revendication 8 et/ou 9, **caractérisé en ce que** les stabilisants des UV peuvent également être utilisés sous forme liquide.

11. Procédé selon au moins l'une quelconque des revendications précédentes 8 à 10, **caractérisé en ce qu'**une granulation, via une granulation en brins et de tête ou via une granulation par fractionnement à chaud et sous eau, est réalisée après l'homogénéisation.

12. Utilisation d'une composition selon l'une ou plusieurs des revendications 1 à 7 pour la préparation de matériaux synthétiques ou de pièces en matériau synthétique résistant à la lumière.

13. Utilisation d'une composition selon au moins l'une quelconque des revendications 1 à 7 pour la stabilisation de polymères naturels, partiellement synthétiques ou synthétiques contre l'influence nuisible d'un rayonnement riche en énergie, tel que la lumière ou les UV, ainsi que contre la chaleur, la dégradation par l'oxygène ou d'autres processus de dégradation.

14. Utilisation selon la revendication 13, **caractérisée en ce que** la composition est mélangée avec un ou plusieurs polymères du groupe suivant : polyoléfines, copolymères d'éthylène-acétate de vinyle (EVA), copolymères de styrène-acrylonitrile (SAN), poly(chlorure de vinyle) (PVC), polyamide (PA), poly(téréphtalate d'éthylèneglycol) (PET), poly(téréphtalate de butylèneglycol)(PBT) et leurs copolyesters, copolymères d'acrylonitrile-butadiène-styrène (ABS), polycarbonate (PC) et ensuite transformée en objet fini.
